# EUROPEAN PATENT APPLICATION

(11) **EP 4 583 221 A2**
(43) Date of publication of application: **09.07.2025**
(21) Application number: 24222922.7
(22) Date of filing: 23.12.2024
(51) Int. Cl.: H01M 10/04, H01M 10/14

(54) **BATTERY PLATE HANDLING APPARATUS AND METHOD**

(30) Priority: 03.01.2024 GB 202400060
(71) Applicant: TBS Engineering Limited, Brockworth, Gloucester GL3 4AQ (GB)
(72) Inventor: RYLAND, Stuart, Gloucester (GB)
(74) Representative: Wynne-Jones IP Limited

(57) **Abstract**

A battery plate handling apparatus comprises a horizontal elongate rack and gripper modules mounted so as to be movable along the rack. Each gripper module comprises a gripper unit carrier mounted on the rack and a gripper unit mounted on the gripper unit carrier for gripping groups of battery plates. The gripper modules comprise at least two adjacent configurable modules each comprising a gripper unit sub-mounting pivotally mounted on a respective carrier so as to pivot around a vertical axis spaced to one side of the rack. The gripper unit sub-mounting comprises a horizontal sub-rack on which a pair of gripper units are mounted such that the horizontal separation between the gripper units can be varied. The horizontal sub rack of one of the sub-mountings is higher than the horizontal sub-rack of the other sub-mounting. A process for configuring the apparatus comprises adjusting the position of the gripper unit carrier for each configurable gripper module on the rack and adjusting the separation of the gripper units on the sub-rack for each configurable gripper module such that the position of the gripper units corresponds to the positions of the groups of battery plates to be handled.

## Description

### FIELD OF THE INVENTION

This invention relates to apparatus and methods for handling battery plates, such as those used during the manufacture of multi-plate batteries such as lead-acid batteries.

### BACKGROUND

In the manufacture of batteries, such as lead acid batteries, groups of battery plates must be arranged and moved between processing stations to form the final battery. For example, cast-on-strap machines are used to cast connectors ("straps") onto the lugs of battery plates to provide an electrical connection between a set of plates within a cell of the battery. Such groups are then output from the cast-on-strap machine and are transported into a battery container. Battery containers typically comprise a housing with a series of partitions which divide the housing into individual cells. Each cell normally receives a single stack of battery plates. The groups of plates are usually transported from the cast-on strap machine to the battery container using an unloading apparatus which comprises several gripper mechanisms. The spacing between each gripper mechanism is set so that they are all correctly placed to pick up and release their respective group of battery plates.

EP 37883712 describes a battery cast-on-strap machine unloading apparatus. The apparatus comprises a first and a second unit. Each unit comprises a rotary drive mechanism and a pinion co-axial with and directly driveable by the rotary drive mechanism. The apparatus further comprises an elongate rack. The rack comprises teeth along a first side and an opposing second side. The first and second units are mounted adjacent to each other on the rack. Operation of each drive mechanism causes rotation of the respective pinion to be converted into linear motion of the respective unit along the rack. Adjacent rotary drive mechanisms are located on opposing sides of the rack, such that the pinion of the first unit meshes with the teeth along the first side of the rack, and the pinion of the adjacent second unit meshes with the teeth along the opposing second side of the rack.

It is often the case that a battery manufacturing line will only make batteries with one configuration of groups of battery plates. If a different configuration is required, it is necessary to completely reconfigure the handling apparatus, which takes considerable time. It is an object of the invention to provide a system that is easier to reconfigure.

### SUMMARY

A first aspect of this invention comprises a battery plate handling apparatus, comprising:
a horizontal elongate rack;
a number of gripper modules mounted on the rack to as to be movable along the rack;
the gripper modules each comprise a gripper unit carrier mounted on the rack and a gripper unit mounted on the gripper unit carrier for gripping groups of battery plates;
wherein
the gripper modules comprise at least two adjacent configurable modules each comprising a gripper unit sub-mounting pivotally mounted on a respective carrier so as to pivot around a vertical axis spaced to one side of the rack, the gripper unit sub-mounting comprising a horizontal sub-rack on which a pair of gripper units are mounted such that the horizontal separation between the gripper units on the sub-rack can be varied, and the horizontal sub rack of one of the sub-mountings is higher than the horizontal sub-rack of the other sub-mounting.

The pivotal mounting allows pairs of plate groups to be handled. By mounting one sub-rack above the other, the sub-mountings can be positioned closer to each other to accommodate close plate group spacings.

The apparatus can further comprise at least one fixed gripper module on the rack on either side of the configurable modules, each fixed module comprising a sub-mounting fixed to a respective gripper unit carrier, and a gripper unit mounted in the fixed sub-mounting.

One embodiment comprises three adjacent configurable modules, wherein the sub-rack of a middle configurable module is at a different height to those of the other configurable modules. In one example, two fixed gripper modules on the rack can be provided on one side of the configurable modules and four fixed gripper modules on the rack on the other side of the configurable modules, each fixed module comprising a sub-mounting fixed to a respective gripper unit carrier, and a gripper unit mounted in the fixed sub-mounting.

The gripper modules can be configurable as two groups, a first group comprising two fixed gripper modules and two configurable gripper modules, and a second group comprising four fixed gripper modules and one configurable gripper module. The spacings between the gripper units of the first and second groups can be the same.

The fixed gripper modules can be arranged in a non-operable configuration so as to be spaced from the configurable gripper modules and located towards respective ends of the rack.

In one embodiment, the gripper sub-units of the configurable modules can be pivoted between a first position in which the sub-racks are parallel to the rack, and a second position in which the sub-racks are perpendicular to the rack.

A second aspect of the invention comprises process for configuring the apparatus, comprising adjusting the position of the gripper unit carrier for each configurable gripper module on the rack, and adjusting the separation of the gripper units on the sub-rack for each configurable gripper module such that the position of the gripper units corresponds to the positions of the groups of battery plates to be handled.

The process can comprise operating the apparatus in a first configuration and subsequently adjusting the positions of the gripper unit carriers and the separation of the gripper units corresponds to the different positions of further stacks of battery plates to be handled. This allows different plate arrangements to be handled by the same apparatus.

Adjusting the position of the gripper unit carrier for each configurable gripper module on the rack can include pivoting the gripper unit sub-mountings around the vertical axis.

Where the apparatus further comprises at least one fixed gripper module on the rack on either side of the configurable modules, the process can further comprise adjusting the position of the gripper unit carrier for each fixed gripper module on the rack such that the positions of the gripper units correspond to the positions of groups of battery plates to be handled.

Further aspects and embodiments of the invention will be apparent from the description below.

### DESCRIPTION OF DRAWINGS

Figure 1 shows an embodiment of battery plate handling apparatus according to an aspect of the invention in a first configuration.
Figure 2 shows a configurable gripper module of the apparatus of Figure 1.
Figure 3 shows a side view of the apparatus Figure 1.
Figure 4 shows a top view of the apparatus of Figure 1.
Figure 5 shows a side view of the apparatus Figure 1 in a second configuration.
Figure 6 shows a top view of the apparatus of Figure 1 in the second configuration.
Figure 7 shows a side view of the apparatus Figure 1 in a third configuration.
Figure 8 shows a top view of the apparatus of Figure 1 in the third configuration.
Figure 9 shows a side view of the apparatus Figure 1 in a fourth configuration.
Figure 10 shows a top view of the apparatus of Figure 1 in the fourth configuration.
Figure 11 shows a side view of the apparatus Figure 1 in a fifth configuration.
Figure 12 shows a top view of the apparatus of Figure 1 in the fifth configuration.
Figure 13 shows a top view of the arrangement of compression frames for the fifth configuration.

### DETAILED DESCRIPTION

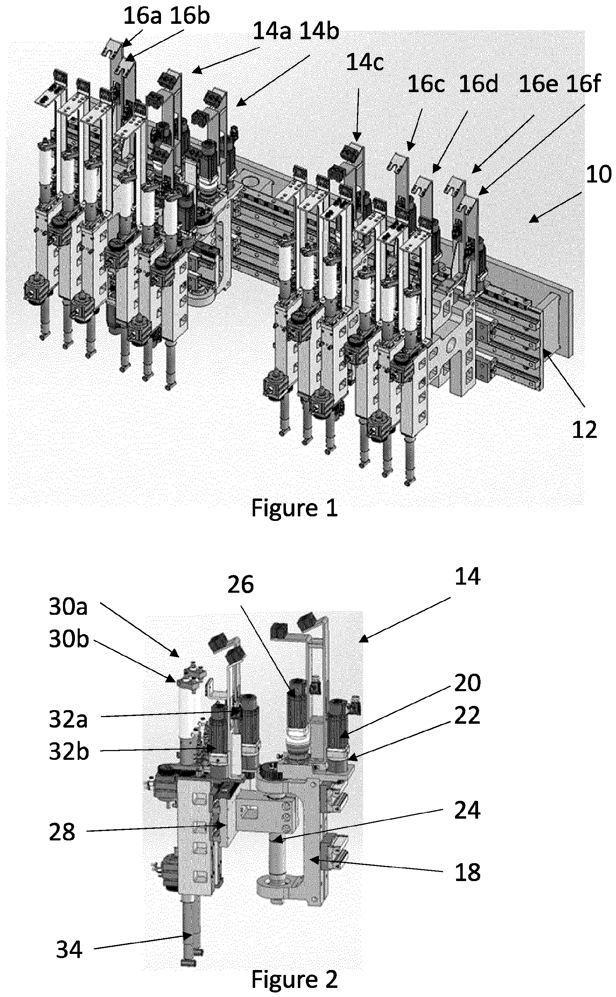

The system shown in Figure 1 comprises a battery plate handling apparatus 10 that can handle up to 12 groups of battery plates. The apparatus includes a rack 12 that extends above a location for picking up or depositing the groups of battery plates (not shown), such as part of a manufacturing line that allows jigboxes, compression frames, battery cases, or the like to be moved into and out of position. A series of gripper modules are mounted on the rack 12 so as to be movable along the rack 12 using servo motors and pinions that engage teeth on either side of the rack.

The gripper modules comprise three configurable gripper modules 14a - 14c, and six fixed gripper modules 16a - 16f.

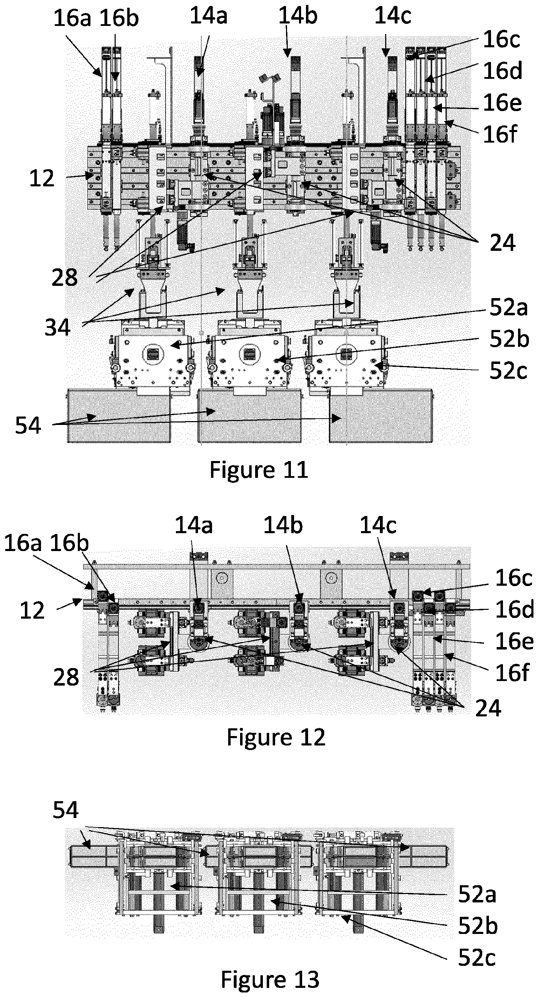

Figure 2 shows a detailed view of a configurable gripper modules 14. This comprises a gripper unit carrier 18 which is mounted in the rack 12 (not shown) to be movable by means of a servo motor 20 which drives a pinion 22 which engages the teeth on one side of the rack 12. The carrier 18 supports a vertical shaft 24 which can be rotated by a shaft servo motor and gears 26. A horizontal sub-rack 28 is mounted on the shaft 24. In the configuration shown in Figure 2, the sub-rack 28 is parallel to the rack 12. The sub-rack 28 can be rotated through 90° by rotation of the shaft 24 so as to be perpendicular to the rack 12 (see Figures 11 - 13). A pair of gripper units 30a, 30b are mounted on the sub-rack 28 and can be moved along the sub-rack 28 by servo motors and gears 32a, 32b that are mounted to engage teeth on either side of the sub-rack 28 in a similar manner to that described in EP 3783712 to allow the gripper units 30a, 30b to be positioned close to each other. Each gripper unit 30a, 30b carries a gripper mechanism 34 (shown in part) for gripping groups of battery plates. Thus, the configurable gripper module 14 can be moved along the rack 12, the orientation of the sub-rack 28 can be adjusted relative to the rack, and the separation of the gripper units 30a, 30b on the sub-rack 28 can be varied.

The fixed gripper modules 16a - 16f are mounted on the rack and operate generally in the same manner as those described in EP 3783712.

In this embodiment, the three configurable gripper modules 14a - 14c are located next to each other and the fixed gripper modules 16a - 16f are distributed on either side of the configurable gripper modules 14a - 14c such that there are two fixed gripper modules 16a, 16b on one side, and four fixed gripper modules 16c - 16f on the other side.

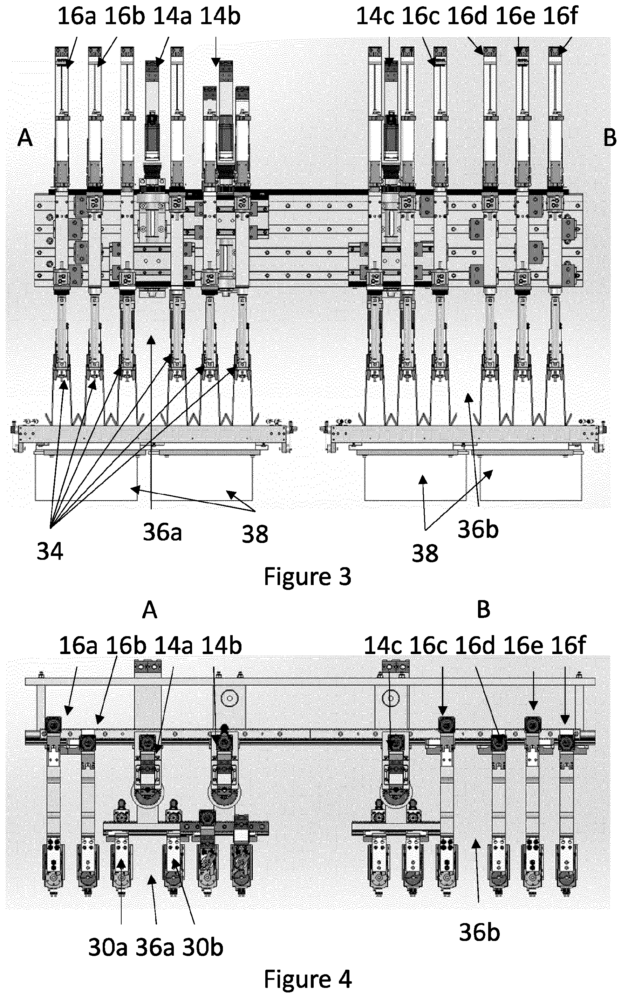

The configuration of Figure 1 is shown in further detail in Figures 3 and 4. The gripper mechanisms 34 are arranged in two groups of six A, B. The first group is formed by the two fixed gripper modules 16a, 16b and two configurable gripper modules 14a, 14b. The second group is formed by one configurable gripper module 14c and four fixed gripper modules 16c - 16f.

As can be seen in Figure 2, the configurable gripper modules 14a - 14c are attached such that their sub-racks 28a - 28c are at different heights so that the sub-racks of adjacent configurable gripper units do not interfere with each other when positioned close to each other (e.g. the first group).

The gripper mechanisms 34 are not equidistant in each group, there being a spacing 36a, 36b in the middle of each group so that the gripper mechanisms 34 align properly with the receptacles 38 for the groups of plates. The space 36a in the first group is created by separating the gripper units 30a, 30b on the sub-rack 28 of the fist configurable gripper module 14a. The space 36b in the second group is created by providing a slightly wider spacing between the first and second fixed gripper modules 16c, 16d.

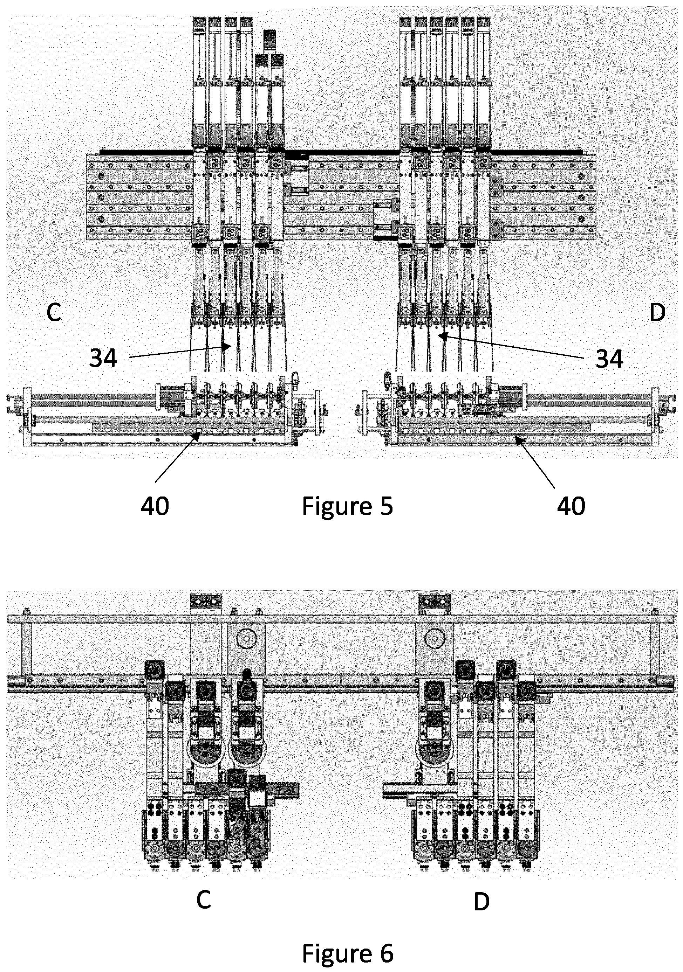

Figures 5 and 6 show a second configuration in which the gripper mechanisms 34 are again in two groups of six C, D. In this case, the gripper mechanisms 34 are equidistant in each group and closely spaced for handling battery plate groups in compression frames 40.

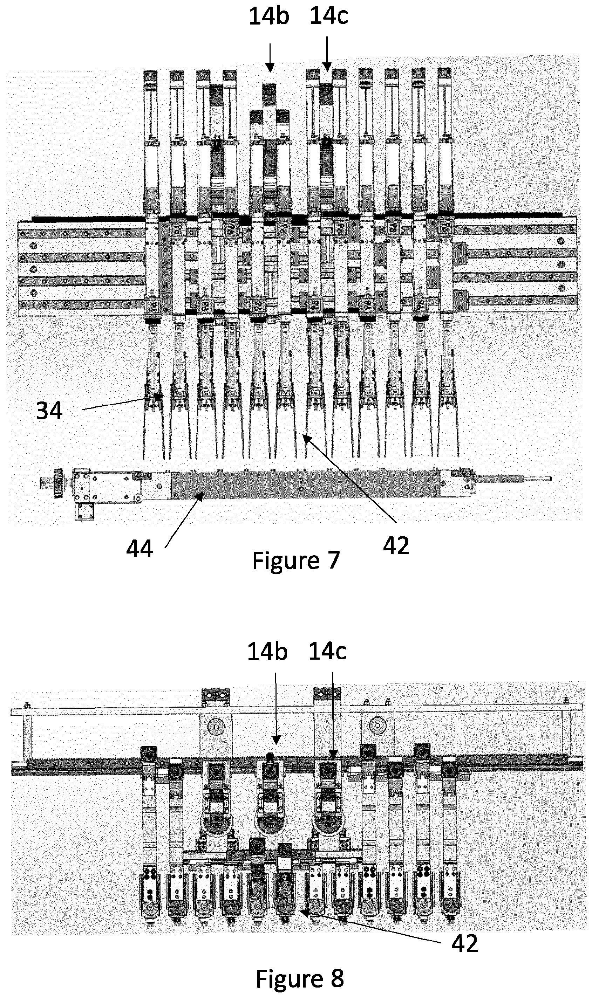

Figures 7 and 8 show a third configuration in which the gripper mechanisms 34 are again closely spaced but in a single group of 12 with a space 42 in the middle of the group so that the gripper mechanisms 34 align properly with the spaces in a jigbox 44 for the groups of plates. The space 42 is created by separating the second and third configurable gripper modules 14b, 14c to provide the required spacing.

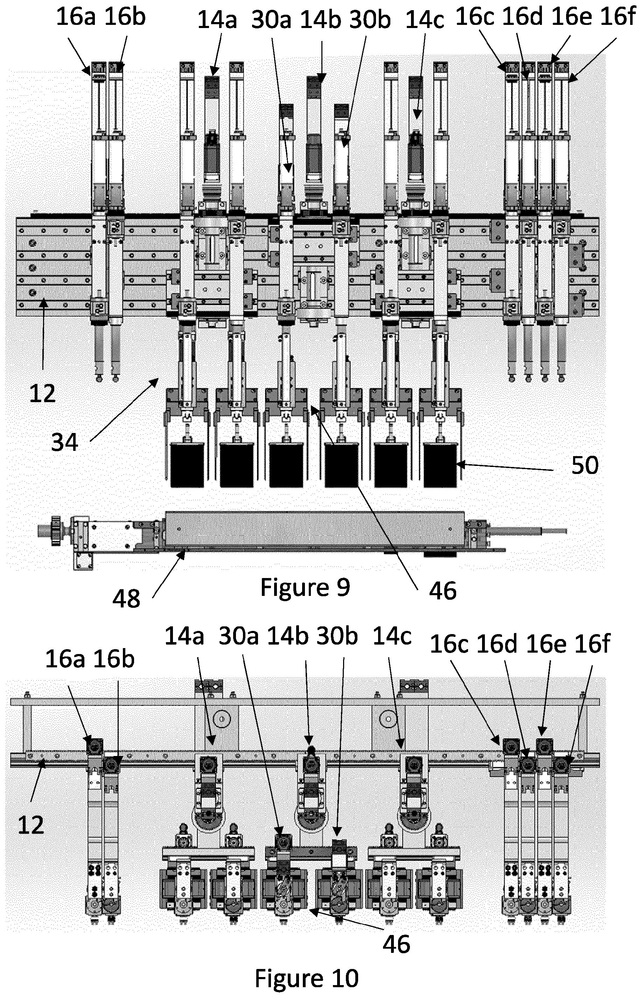

Figures 9 and 10 show a fourth configuration in which the gripper mechanisms 34 are more widely spaced in a single group of six with a space 46 in the middle of the group so that the gripper mechanisms 34 align properly with the spaces in a jigbox 48 for the groups of plates. In this configuration, only the configurable gripper modules 14a - 14c are used, with the gripper mechanisms 34 set for thicker stacks of plates 50. The space 46 is created by separating the gripper units 30a, 30b of the second configurable gripper module 14b to provide the required spacing. In this embodiment, the unused fixed gripper modules 16a - 16f are moved to the respective ends of the rack 12 so as not to interfere with the configurable modules 14a - 14c.

Figures 11 - 13 show a fifth configuration for use with pairs of groups to be loaded into compression frames for use in a 3x2 space box. In this configuration, again only the configurable gripper modules 14a - 14c are used and the unused fixed gripper modules 16a - 16f are moved to the respective ends of the rack 12 so as not to interfere with the configurable modules 14a - 14c. The sub-racks 28 of each configurable gripper module 14a - 14c are rotated through 90° by rotation of the shaft 24 so as to be perpendicular to the rack 12 so that pairs of gripper mechanisms 34 are aligned transversely to the rack 12. Each configurable gripper module 14a - 14c is aligned with a respective compression frame 52a - 52c, each having a pair of receptacles for battery plate groups. The boxes 54 into which the groups are to be loaded have six spaces in a 3x2 arrangement and are indexed below the configurable gripper modules 14a - 14c and compression frames 52a - 52c such that each configurable gripper module/compression frame combination aligns with a different row of the spaces in a box. Moving a box 54 to each location successively means that each pair of spaces can be placed below a configurable gripper module/compression frame combination.

Further changes can be made within the scope of the invention. For example, the number of fixed and configurable gripper modules can be selected according to requirements. Also, the number of gripper units on each sub-rack can be selected depending on operation requirements. Other changes can also be made.

## Claims

1. A battery plate handling apparatus, comprising:
a horizontal elongate rack; and
gripper modules mounted on the rack so as to be movable along the rack, wherein each gripper module comprises a gripper unit carrier mounted on the rack and a gripper unit mounted on the gripper unit carrier for gripping groups of battery plates;
wherein
the gripper modules comprise at least two adjacent configurable modules each comprising a gripper unit sub-mounting pivotally mounted on a respective carrier so as to pivot around a vertical axis spaced to one side of the rack, the gripper unit sub-mounting comprising a horizontal sub-rack on which a pair of gripper units are mounted such that the horizontal separation between the gripper units on the sub-rack can be varied, and the horizontal sub rack of one of the sub-mountings is higher than the horizontal sub-rack of the other sub-mounting.

2. An apparatus as claimed in claim 1, further comprising at least one fixed gripper module on the rack on either side of the configurable modules, each fixed module comprising a sub-mounting fixed to a respective gripper unit carrier, and a gripper unit mounted in the fixed sub-mounting.

3. An apparatus as claimed in claim 1 or 2, comprising three adjacent configurable modules, wherein the sub-rack of a middle configurable module is at a different height to those of the other configurable modules.

4. An apparatus as claimed in any claim 3, further comprising two fixed gripper modules on the rack on one side of the configurable modules and four fixed gripper modules on the rack on the other side of the configurable modules, each fixed module comprising a sub-mounting fixed to a respective gripper unit carrier, and a gripper unit mounted in the fixed sub-mounting.

5. An apparatus as claimed in claim 4, wherein the gripper modules are configurable as two groups, a first group comprising two fixed gripper modules and two configurable gripper modules, and a second group comprising four fixed gripper modules and one configurable gripper module.

6. An apparatus as claimed in claim 5, wherein the spacings between the gripper units of the first and second groups are the same.

7. An apparatus as claimed in claim 4, wherein the fixed gripper modules can be arranged in a non-operable configuration so as to be spaced from the configurable gripper modules and located towards respective ends of the rack

8. An apparatus as claimed in any preceding claim, wherein the gripper sub-units of the configurable modules can be pivoted between a first position in which the sub-racks are parallel to the rack, and a second position in which the sub-racks are perpendicular to the rack.

9. A process for configuring an apparatus as claimed in any preceding claim, comprising adjusting the position of the gripper unit carrier for each configurable gripper module on the rack, and adjusting the separation of the gripper units on the sub-rack for each configurable gripper module such that the position of the gripper units corresponds to the positions of the groups of battery plates to be handled.

10. A process as claimed in claim 9, comprising operating the apparatus in a first configuration and subsequently adjusting the positions of the gripper unit carriers and the separation of the gripper units corresponds to the different positions of further groups of battery plates to be handled.

11. A process as claimed in claim 9 or 10, wherein adjusting the position of the gripper unit carrier for each configurable gripper module on the rack includes pivoting the gripper unit sub-mountings around the vertical axis.

12. A process as claimed in claim 9, 10, or 11, wherein the apparatus further comprises at least one fixed gripper module on the rack on either side of the configurable modules, the process further comprising adjusting the position of the gripper unit carrier for each fixed gripper module on the rack such that the positions of the gripper units correspond to the positions of groups of battery plates to be handled.
